# EUROPEAN PATENT APPLICATION

(11) **EP 1 566 975 A1**
(43) Date of publication of application: **24.08.2005**
(21) Application number: 05003580.7
(22) Date of filing: 18.02.2005
(51) Int. Cl.: H04N 13/00, G02B 27/22

(54) **Stereoscopic two-dimensional image display apparatus and stereoscopic two-dimensional image display method**

(30) Priority: 19.02.2004 JP 2004043554
(71) Applicant: Pioneer Corporation, Tokyo (JP)
(72) Inventor: Tomisawa, Isao, Pioneer Corporation, Tokorozawa-shi Saitama (JP); Ishikawa, Masaru, Pioneer Corporation, Tokorozawa-shi Saitama (JP); Amai, Masatoshi, Pioneer Design Corporation, Meguro-ku Tokyo (JP)
(74) Representative: Reinhard - Skuhra - Weise & Partner

(57) **Abstract**

In a stereoscopic two-dimensional image display apparatus (100), there are provided a display unit (27) for displaying a two-dimensional image on an image display surface (31a); an image transmission panel (29) which stereoscopically displays a two-dimensional image by causing the light emitted from the image display surface (31a) to form an image (53) by a microlens array (43) disposed in spaced-apart relation to the image display surface (31a); and a two-dimensional image panel (23) whose image display surface (23a) is disposed in an arbitrary one of upper, lower, left, and right planes relative to the stereoscopic two-dimensional image (formed image), and on which an image associated with the stereoscopic two-dimensional image (formed image) is displayed.

## Description

The present disclosure relates to the subject matter contained in Japanese Patent Application No. 2004-043554 filed on February 19, 2004, which is incorporated herein by reference in its entirety.

### BACKGROUND OF THE INVENTION

### Field of the Invention

The present invention relates to a stereoscopic two-dimensional image display system and a stereoscopic two-dimensional image display method for displaying a two-dimensional image stereoscopically.

### Description of the Related Art

In recent years, with respect to interior design appliances, displays for sales promotion, communication terminal devices, game apparatuses, and the like, various attempts have been made to stereoscopically reproduce image information by various methods for the purpose of improving realism, visibility, and amusement features. Generally, binocular parallax (a difference in visual directions or a disparity in retinal images between both eyes occurring when a solid or an object of a different depth is viewed with both eyes) is one physiological factor allowing a human being to view an object stereoscopically. As a method of reproducing a stereoscopic image on the basis of this binocular parallax, a polarization method is known in which a viewer wears polarized glasses and views left and right disparity images based on mutually different polarized states. However, the wearing of the polarized glasses constitutes a troublesome drawback to the viewer.

In contrast, as a method of displaying a stereoscopic image which does not use polarized glasses, a lenticular lens method is known. This is a technique in which a plurality of screens are formed as latent images on one screen, the plurality of screens are viewed through a translucent screen in which semicylindrical lenses of fixed widths are connected in the horizontal direction, so as to enable stereoscopic representation or representation of moving images. Namely, images which are obtained by dividing each of the plurality of images into stripes in the vertical direction in correspondence with the pitches of the semicylindrical lenses are arrayed regularly, and stereoscopic vision is realized on the basis of the focal position of each lens which changes due to the direction in which the screen is viewed and the distance and on the basis of how the image disposed there is viewed. Specifically, for the reproduction of a stereoscopic image, alternately arrayed stripe images are supplied to both eyes of the viewer from two left and right disparity images corresponding to both eyes of the viewer by using the lenticular lenses, so as to allow a stereoscopic image to be recognized (e.g., see JP-A-10-221644).

### SUMMARY OF THE INVENTION

With the above-described lenticular lens method, since a plurality of screens are formed as latent images on one screen, disparity images corresponding to both eyes of the viewer are required from the imaging step. To supply these images, much operation is required, including such as computer image processing, lenticular lens design, and the operation of accurate combination of the lenses and the image. Accordingly, a display for displaying a stereoscopic two-dimensional image using lenticular lenses tends to be expensive.

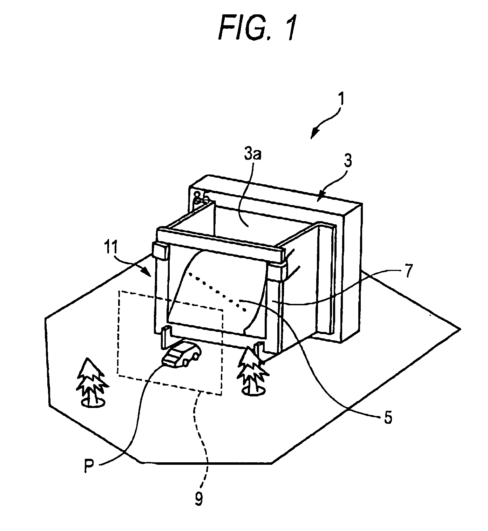

To overcome such a drawback, an image display apparatus has been proposed for displaying a stereoscopic two-dimensional image with a simple construction by allowing a two-dimensional image to be formed as a real image by microlens arrays. As shown in Fig. 1, this image display apparatus 1 consists of a display unit 3 for displaying on a planar image display surface 3a a two-dimensional image including a stereoscopic image, as well as an image transmission panel 11 which is disposed in parallel to and spaced apart from the image display surface 3a and includes a microlens array 5 formed by a plurality of lenses and having a wider effective area than a stereoscopic image in the two-dimensional image and a lens frame area 7 surrounding an effective region of the microlens array 5. The image transmission panel 11 is adapted to generate an image forming plane 9 of a real image (formed image) P of a two-dimensional image in a space located on a side opposite to the display unit 3. According to this image display apparatus 1, it is possible to stereoscopically display a two-dimensional image including a stereoscopic image with a very simple construction. In addition, polarized glasses is not required, and the resolution of the stereoscopic image is not caused to decline.

The above-described image display apparatus 1 is capable of easily displaying a two-dimensional image stereoscopically. However, since the display is provided by one display unit 3 alone, even if a two-dimensional image is displayed as a stereoscopically formed image, the image tends to be an isolated image which is unrelated to the surroundings, and the rendering power for visually perceiving the difference in depth has been insufficient. As a result, there has been a limit to the more natural display of stereoscopic two-dimensional images, and it has been impossible to obtain sufficient realism, visibility, and amusement features.

The invention has been devised in view of the above-described circumstances, and one of objects of the present invention is to provide a stereoscopic two-dimensional image display apparatus and a stereoscopic two-dimensional image display method which make it possible to yield a large difference in depth, obtain high rendering power, and display a stereoscopic two-dimensional image more naturally, thereby further improving realism, visibility, and amusement features.

According to a first aspect of the invention, there is provided a stereoscopic two-dimensional image display apparatus including: a display unit having an image display surface for displaying a two-dimensional image; an image transmission panel which has a microlens array disposed in spaced-apart relation to the image display surface, and forms a stereoscopic two-dimensional image by allowing the light emergent from the image display surface by the microlens array; and a two-dimensional image direct viewing panel having an image display surface disposed in an arbitrary space on at least one of upper, lower, left, and right sides relative to the stereoscopic two-dimensional image.

According to a second aspect of the invention, there is provided a stereoscopic two-dimensional image display method including: causing a two-dimensional image displayed on an image display surface of a display unit to form an image by a microlens array disposed in spaced-apart relation to the image display surface, so as to display a stereoscopic two-dimensional image in front of the image display surface; and displaying an image on an image display surface of a two-dimensional image direct viewing panel disposed in an arbitrary space on at least one of upper, lower, left, and right sides relative to the stereoscopic two-dimensional image.

### BRIEF DESCRIPTION OF THE DRAWINGS

The above objects and advantages of the present invention will become more apparent by describing in detail preferred exemplary embodiments thereof with reference to the accompanying drawings, wherein:
Fig. 1 is a perspective view illustrating a schematic configuration of a conventional image display apparatus;
Figs. 2A and 2B are side elevational views respectively illustrating an upright state and a horizontal state of a two-dimensional image direct viewing panel of the stereoscopic two-dimensional image display apparatus in accordance with a first embodiment of the invention;
Figs. 3A, 3B, and 3C are side elevational views illustrating examples of configurations of different mechanisms for moving the two-dimensional image direct viewing panel shown in Fig. 2;
Fig. 4 is an explanatory diagram illustrating a state in which an angle formed by the two-dimensional image direct viewing panel and a stereoscopic two-dimensional image is changed;
Fig. 5 is a cross-sectional view of an image display device shown in Fig. 2;
Fig. 6 is a partial cross-sectional view of a microlens array shown in Fig. 4;
Figs. 7A and 7B are front elevational views illustrating examples of images displayed on the two-dimensional image direct viewing panel;
Fig. 8A is an explanatory diagram illustrating images obtained by simultaneously driving an image transmission panel and the two-dimensional image direct viewing panel;
Fig. 8B is an explanatory diagram illustrating another example of guide information;
Figs. 9A and 9B are front views of the stereoscopic two-dimensional image display apparatus and its display images in accordance with a second embodiment of the invention, in which Fig. 9A is a diagram in which large-size two-dimensional images are being displayed, and Fig. 9B is a diagram in which small-size two-dimensional images are being displayed; and
Fig. 10 is a front view of the stereoscopic two-dimensional image display apparatus its display images in accordance with a third embodiment of the invention.

### DETAILED DESCRIPTION OF THE PREFERRED EMBODIMENTS

Hereafter, a description will be given of preferred embodiments of a stereoscopic two-dimensional image display apparatus and a stereoscopic two-dimensional image display method in accordance with the invention.

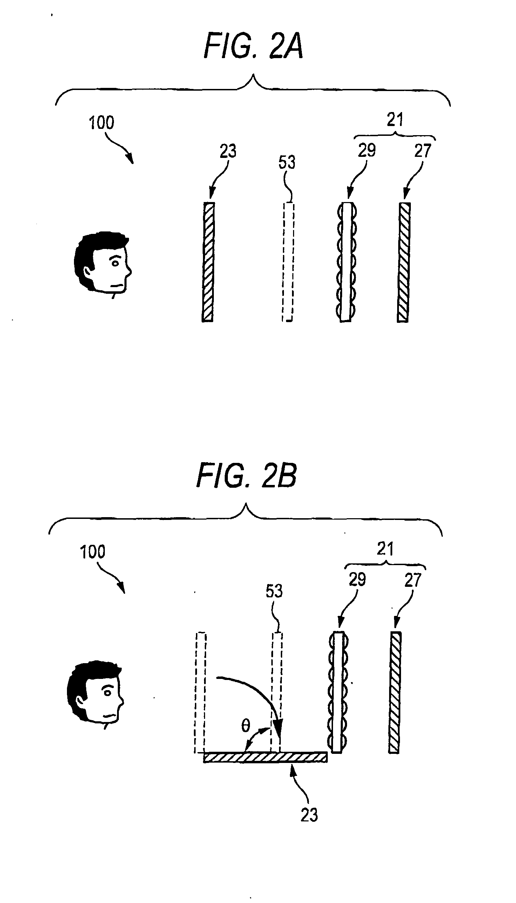

Figs. 2A and 2B are side elevational views respectively illustrating an upright state and a horizontal state of a two-dimensional image direct viewing panel of the stereoscopic two-dimensional image display apparatus in accordance with a first embodiment of the invention.

A stereoscopic two-dimensional image display apparatus 100 in accordance with this embodiment has an image display device 21 and a two-dimensional image direct viewing panel 23 as its principal members. In Fig. 2, as for the stereoscopic two-dimensional image display apparatus 100, only its principal component elements are schematically shown, but these component elements may be provided in an unillustrated housing.

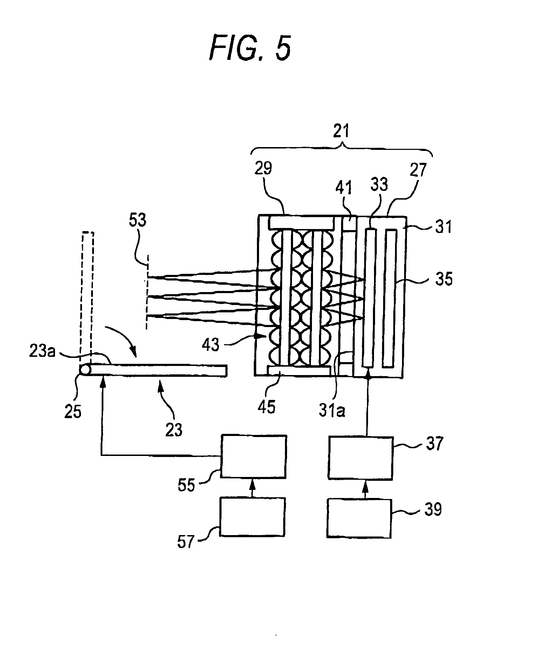

As will be described later in detail, the image display device 21 includes an image transmission panel 29 having a microlens array 43 (see Fig. 5), and stereoscopically displays a two-dimensional image on an image forming plane 53 by means of this image transmission panel 29. In this specification, the two-dimensional image displayed on the image forming plane 53 will also be called a stereoscopic two-dimensional image. Meanwhile, as for the two-dimensional image direct viewing panel 23, an image display surface is disposed in an arbitrary one of upper, lower, left, and right planes relative to the stereoscopic two-dimensional image which is displayed on the image forming plane. An image associated with the stereoscopic two-dimensional image (formed image) is displayed on this image forming plane.

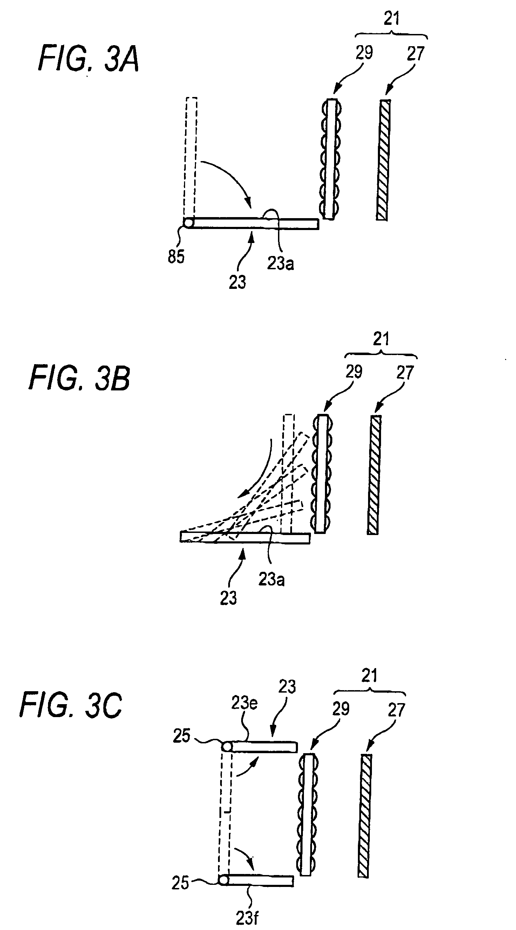

Figs. 3A, 3B, and 3C are side elevational views illustrating examples of configurations of different mechanisms for moving the two-dimensional image direct viewing panel 23 shown in Fig. 2.

In this embodiment, as shown in Fig. 3A, the two-dimensional image direct viewing panel 23 is provided movably by a rotating shaft 25 oriented in the same direction as an arbitrary side portion. As a result, the arrangement provided is such that, in a simple structure, the two-dimensional image direct viewing panel 23 can be disposed uprightly in front of and in parallel with the image display device (image transmission panel) 21, and can be horizontally disposed in front of the image display device (image transmission panel) 21 by causing an image display surface 23a to oppose the stereoscopic two-dimensional image (formed image). Through such a configuration, it becomes possible to view only the image displayed on the two-dimensional image direct viewing panel 23 by obstructing the stereoscopic two-dimensional image from the field of view, as required.

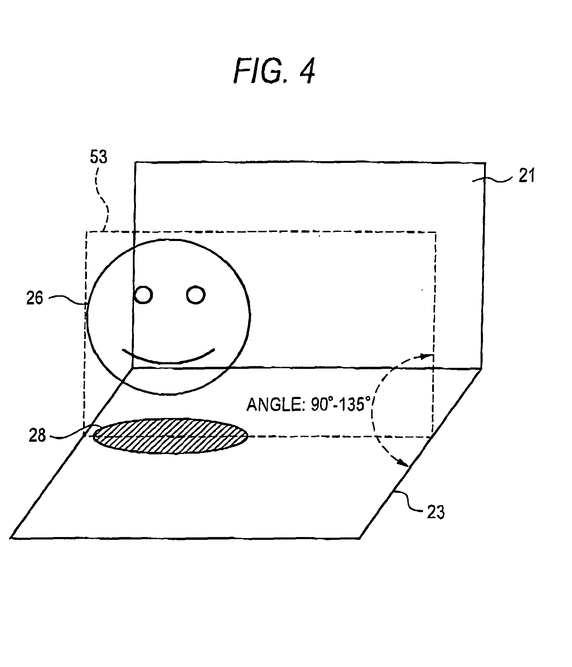

In Fig. 2, an angle θ formed by the stereoscopic two-dimensional image (image forming plane) 53 and the two-dimensional image direct viewing panel 23 is preferably not less than 90 degrees and not more than 135 degrees. Consequently, as shown in Fig. 4, when the two-dimensional image direct viewing panel 23 is horizontally disposed in front of the image display device (image transmission panel) 21, the visible area of the two-dimensional image direct viewing panel 23 which, together with a stereoscopic two-dimensional image (formed image) 26, is viewed by a viewer becomes optimal. Also, it is possible to obtain an associated image 28 (e.g., a shadow of the formed image 26) which does not impart a sense of incompatibility with the stereoscopic two-dimensional image (formed image) 26. Namely, in a case where the angle formed by the stereoscopic two-dimensional image (formed image) 26 and the two-dimensional image direct viewing panel 23 is not more than 90 degrees, the visible area of the two-dimensional image direct viewing panel 23 becomes small, and the visibility of the associated image 28 declines. Meanwhile, in a case where the angle formed by the stereoscopic two-dimensional image (formed image) 26 and the two-dimensional image direct viewing panel 23 is not less than 135 degrees, the stereoscopic two-dimensional image (formed image) 26 and the associated image 28 are too spaced apart, and it becomes difficult to impart relatedness between the stereoscopic two-dimensional image (formed image) 26 and the associated image 28.

As for another configuration allowing the two-dimensional image direct viewing panel 23 to be disposed uprightly or horizontally in front of the image display device 21, as shown in Fig. 3B, both sides of the two-dimensional image direct viewing panel 23 may respectively be supported by two unillustrated rotating and moving shafts, and the rotating and moving shafts may be moved along unillustrated guide rails. The two-dimensional image direct viewing panel 23 may thereby be made movable so as to be capable of being disposed uprightly or horizontally in the process shown in the broken lines in the drawing.

In addition, as shown in Fig. 3C, the two-dimensional image direct viewing panel 23 may be divided at its substantially vertically central portion into upper and lower portions by a horizontally dividing line, and respective divided two-dimensional image direct viewing panels 23e and 23f may be supported rotatably by the rotating shafts 25. Such two-dimensional image direct viewing panels 23e and 23f may thereby be made movable so as to be capable of being disposed uprightly or horizontally. In such a configuration in which the two-dimensional image direct viewing panel 23 is divided into the two-dimensional image direct viewing panels 23e and 23f, when the two-dimensional image direct viewing panels 23e and 23f are disposed in an identical plane to make up one screen, an upper half and a lower half of a display image are displayed in a divided form on the respective two-dimensional image direct viewing panels 23e and 23f. On the other hand, when the respective two-dimensional image direct viewing panels 23e and 23f are disposed horizontally, an upper image (e.g., the sky and clouds) and a lower image (e.g., a lane of a road) concerning a vehicle, for example, which are stereoscopic two-dimensional images (formed images) are respectively displayed independently.

Fig. 5 is a cross-sectional view of the image display device 21 shown in Fig. 2.

The image display device 21, if largely classified, consists of a display unit 27 and the image transmission panel 29. The display unit 27 has, for example, a color liquid-crystal display (LCD) 31 as its principal member. The LCD 31 has a planar image display surface 31a for displaying a two-dimensional image including a stereoscopic image. The LCD 31 is provided with a flat color liquid-crystal panel 33 for the image display surface 31a, a backlight illuminating portion 35, and a color liquid-crystal drive circuit 37. The color liquid-crystal drive circuit 37 is connected to a video signal supplying unit 39 for supplying a video signal for the two-dimensional image including the stereoscopic image. As the display unit 27, a cathode ray tube, a plasma display, an organic electroluminescence display, or the like may be used instead of the LCD 31.

A support member 41 is fixed to peripheral edges of the LCD 31, and the support member 41 supports the image transmission panel 29. The image transmission panel 29 consists of the microlens array 43 and a lens frame 45 surrounding an effective area of the microlens array 43. The support member 41 supports the lens frame 45, and disposes the image transmission panel 29 in spaced-apart relation to the image display surface 31a of the color liquid-crystal panel 33.

The effective area of the microlens array 43 is set to be identical to the area of the image display surface 31a of the color liquid-crystal panel 33. The lens frame 45 has a dark color such as black, and suppresses the degree by which the viewer becomes conscious of the presence of the microlens array 43.

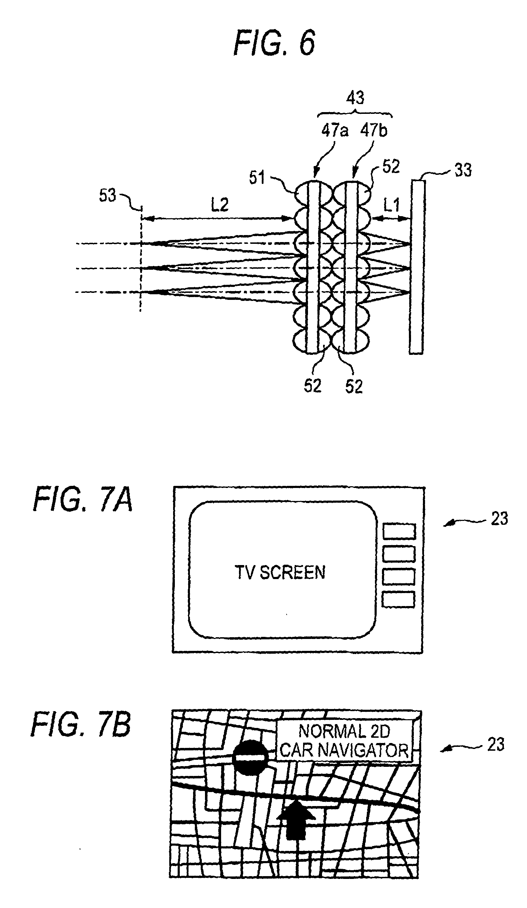

Fig. 6 is a partial cross-sectional view of the microlens array shown in Fig. 5.

The microlens array 43 is composed of a plurality of microlenses arranged two-dimensionally. The microlens array 43 is a convex microlens plate formed by integrating two lens array halves 47a and 47b as a set. In the convex microlens plate, a plurality of lens systems each consisting of a pair of convex lenses with their optical axes arranged coaxially are arranged two-dimensionally so that their optical axes become parallel to each other.

It should be noted that the display unit 27 and the microlens array 43 which are shown in the above-described embodiment need not necessarily be disposed in parallel to each other.

The curvature of convex lenses 51 formed on the left-side surface of the left lens array half 47a in Fig. 6 is formed to be greater than the curvature of the other convex lenses 52. The distance L2 between the lens surface and an image-side focal point (image forming plane 53) of the left lens array half 47a in the drawing is longer than the distance L1 between the lens surface and the color liquid-crystal panel 33 of the right lens array half 47b in the drawing. Consequently, the image forming plane 53 is sufficiently spaced apart from the image transmission panel 29.

When the microlens array 43 is disposed in parallel to the front surface of the display unit 27 (see Fig. 5) and at a position spaced apart the imaging distance L1 of the substantially convex lens 52, the microlens array 43 projects the image displayed on the display unit 27 onto the image forming plane 53 spaced part the imaging distance L2 on the opposite side to the display unit 27. Although this projected image is a two-dimensional image, in a case where the image is one which gives a sense of depth (stereoscopic), the image is displayed as if it is floating in the space. Therefore, it appears to the viewer as if a stereoscopic image is being displayed.

It should be noted that the two-dimensional image displayed on the display unit 27 is temporarily inverted vertically when it passes through one lens array half 47b, but the two-dimensional image is inverted again when it passes through the other lens array half 47a. As a result, the image transmission panel 29 is capable of causing the two-dimensional image displayed on the display unit 27 to be displayed on the image forming plane 53 as an erect stereoscopic two-dimensional image.

It should be noted that the microlens array 43 shown in the above-described embodiment is formed by integrating the two lens array halves 47a and 47b as a set, the invention is not necessarily limited to this arrangement, and the microlens array 43 may be formed by a single lens array half. In such an arrangement, however, since the two-dimensional image which is formed by each of the lenses making up the microlens array half is displayed inversely, it is necessary to arrange the microlens array half such that one lens is allotted to each of the display pixels of the display unit 27.

As shown in Fig. 5, the two-dimensional image direct viewing panel 23 consists of, for example, a color liquid-crystal display (LCD). The two-dimensional image direct viewing panel 23 has the planar image display surface 23a for displaying a two-dimensional image. The two-dimensional image direct viewing panel 23 is provided with the flat color liquid-crystal panel of the image display surface 23a, an unillustrated backlight illuminating portion, and a color liquid-crystal drive circuit 55. The color liquid-crystal drive circuit 55 is connected to a video signal supplying unit 57 for supplying a video signal for the two-dimensional image.

An unillustrated control unit is connected to the video signal supplying unit 39 and the video signal supplying unit 57, and the control unit controls respective display modes of the video signals transmitted to these video signal supplying units as well as the disposed attitude of the two-dimensional image direct viewing panel 23. Namely, as shown in Fig. 5, in the case where the two-dimensional image direct viewing panel 23 is horizontally disposed, the control unit causes the video signal supplying unit 39 to transmit a two-dimensional signal including a stereoscopic image, and causes the video signal supplying unit 57 to transmit a two-dimensional signal associated with a stereoscopic two-dimensional image (formed image). On the other hand, in the state in which the two-dimensional image direct viewing panel 23 is disposed uprightly in front of the image forming plane 53 (the state shown by the broken line in Fig. 5), the mode becomes a two-dimensional image display mode in which the control unit causes the video signal supplying unit 57 to transmit an ordinary two-dimensional image signal such as that of TV or DVD, and stops the transmission of the video signal from the video signal supplying unit 39. Such control of each disposed attitude of the two-dimensional image direct viewing panel 23 can be automatically changed over by providing an angle sensor on the rotating shaft 25 or the like and detecting the rotational angle of the two-dimensional image direct viewing panel 23, or by moving the two-dimensional image direct viewing panel 23 by a rotary motor or the like.

Next, a description will be given of the operation of the above-described stereoscopic two-dimensional image display apparatus.

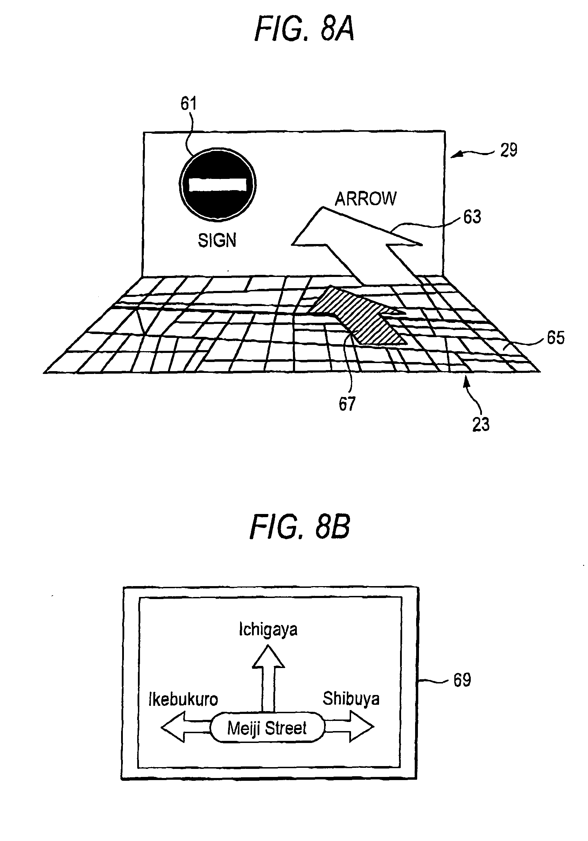

Figs. 7A and 7B are front elevational views illustrating examples of images displayed on the two-dimensional image direct viewing panel. Figs. 8A and 8B show one example in which the invention is applied to the display of a car navigation system, and in which map information 65 is displayed on the two-dimensional image direct viewing panel 23 disposed below sign 61 displayed in the form of a stereoscopic two-dimensional image and an arrow 63 indicating a direction. Namely, Fig. 8A is an explanatory diagram illustrating images obtained by simultaneously driving the image transmission panel 29 and the horizontally disposed two-dimensional image direct viewing panel 23. Fig. 8B is an explanatory diagram illustrating another example of guide information.

In the stereoscopic two-dimensional image display apparatus 100, as shown in Fig. 2A, the two-dimensional image direct viewing panel 23 can be disposed in front of and substantially in parallel with the image transmission panel 29. In this two-dimensional image display mode, only a normal two-dimensional image, such as TV or DVD shown in Fig. 7A or a two-dimensional car navigation shown in Fig. 7B, is displayed on the two-dimensional image direct viewing panel 23 with the image transmission panel 29 shielded.

Meanwhile, if the two-dimensional image direct viewing panel 23 is rotated by the rotating shaft 25 (see Fig. 3A) so as to be inclined backward and disposed horizontally, as shown in Fig. 2B, a changeover is effected to the stereoscopic two-dimensional image mode by the control unit, so that a stereoscopic two-dimensional image is displayed on the image forming plane 53 by the image display device 21, while an image associated with this stereoscopic two-dimensional image (formed image) is displayed on the two-dimensional image direct viewing panel 23. As a specific example, as shown in Fig. 8A, the sign 61 and the arrow 63 indicating a traveling direction are displayed on the image forming plane 53 as stereoscopic two-dimensional images, while the road map 65 and a shadow 67 of the arrow 63 are displayed on the two-dimensional image direct viewing panel 23. Alternatively, such as a road guide display 69 shown in Fig. 8B can be displayed instead of the sign 61

In consequence, while during the normal two-dimensional image display mode only the two-dimensional image direct viewing panel 23 can be driven to effect display, during the stereoscopic two-dimensional image display mode the two-dimensional image direct viewing panel 23 can be used as an auxiliary display device for stereoscopic display. Thus the visibility effect can be increased while enhancing the efficiency of utilizing the two-dimensional image direct viewing panel 23. In addition, since during the normal two-dimensional image display mode the image transmission panel 29 can be covered by erecting the two-dimensional image direct viewing panel 23, the effect of protecting the image transmission panel 29 is produced. Also, it becomes possible to view only the image displayed on the two-dimensional image direct viewing panel 23 by shielding the stereoscopic two-dimensional image from the field of view, as required.

Therefore, according to the above-described stereoscopic two-dimensional image display apparatus 100, there are provided the image transmission panel 29 which stereoscopically displays a two-dimensional image by causing the light emitted from the image display surface to form an image by the microlens array 43 disposed in spaced-apart relation to the image display surface, as well as the two-dimensional image direct viewing panel 23 whose image display surface 23a is disposed in an arbitrary one of upper, lower, left, and right planes relative to the stereoscopic two-dimensional image (formed image), and on which an image associated with the stereoscopic two-dimensional image (formed image) is displayed. As such, as the stereoscopic two-dimensional image (formed image) and its associated image on the two-dimensional image direct viewing panel 23 are interlocked, the stereoscopic two-dimensional image (formed image) and its surrounding scene are integrated. Thus it is possible to further improve the stereoscopic visual effect, and obtain high rendering power for expressing different depths. As a result, it is possible to further improve realism, visibility, and amusement features.

In addition, according to the stereoscopic two-dimensional image displaying method, a two-dimensional image is formed by the microlens array 43 and is displayed stereoscopically, and an image associated with the stereoscopic two-dimensional image (formed image) is displayed on the image display surface 23a of the two-dimensional image direct viewing panel 23 disposed in an arbitrary one of upper, lower, left, and right planes relative to the stereoscopic two-dimensional image (formed image). Therefore, by interlocking the stereoscopic two-dimensional image (formed image) and its associated image on the two-dimensional image direct viewing panel 23, the stereoscopic two-dimensional image (formed image) and its surrounding scene can be incorporated as an integral stereoscopic image, making it possible to further improve the stereoscopic visual effect. As a result, it is possible to obtain high rendering power for expressing different depths, and further improve realism, visibility, and amusement features.

Next, a description will be given of a stereoscopic two-dimensional image display apparatus in accordance with a second embodiment of the invention.

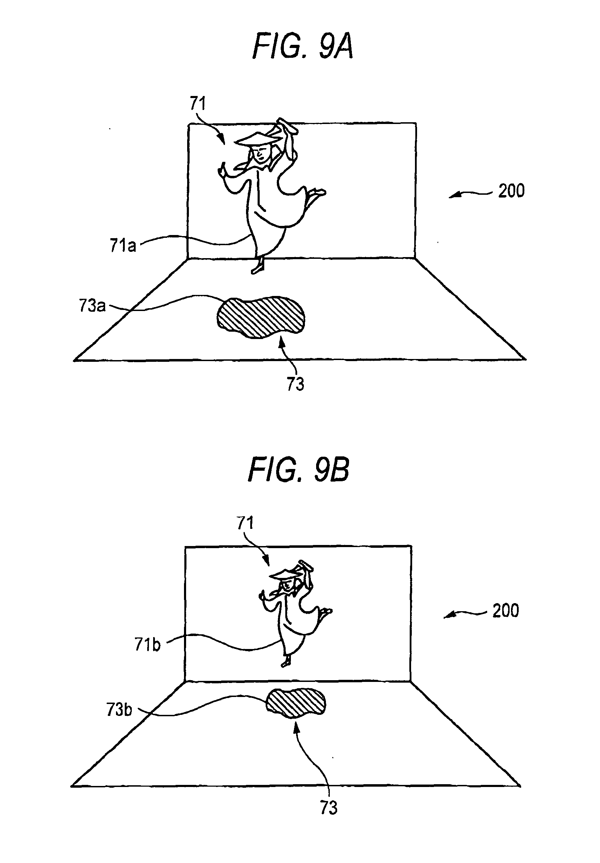

Figs. 9A and 9B are front views of the stereoscopic two-dimensional image display apparatus and its display images in accordance with the second embodiment of the invention. Fig. 9A is a diagram in which large-size two-dimensional images are being displayed, and Fig. 9B is a diagram in which small-size two-dimensional images are being displayed.

A stereoscopic two-dimensional image display apparatus 200 in accordance with this embodiment has the same configuration as that of the above-described stereoscopic two-dimensional image display apparatus 100, but its displaying method differs from that of the above-described stereoscopic two-dimensional image display apparatus 100. Namely, with the stereoscopic two-dimensional image display apparatus 200 in accordance with this embodiment, for instance, a fairy 71, i.e., a stereoscopic two-dimensional image, and its shadow 73, which is displayed on the two-dimensional image direct viewing panel, are displayed in different sizes while being moved.

Therefore, according to this stereoscopic two-dimensional image display apparatus 200, the size and the display position (moving closer to or away from the viewer) of the shadow displayed on the two-dimensional image direct viewing panel change in interlocking relation to the display size of the fairy which is a stereoscopic two-dimensional image, as shown in Figs. 9A and 9B. Hence, a fairy 71b and a shadow 73b of small sizes appear to be present in the rear relative to a fairy 71a and a shadow 73a of large sizes. Consequently, a sense of perspective is produced, and differences in depth become greater, thereby making it possible to obtain higher rendering power.

Next, a description will be given of a stereoscopic two-dimensional image display apparatus in accordance with a third embodiment of the invention.

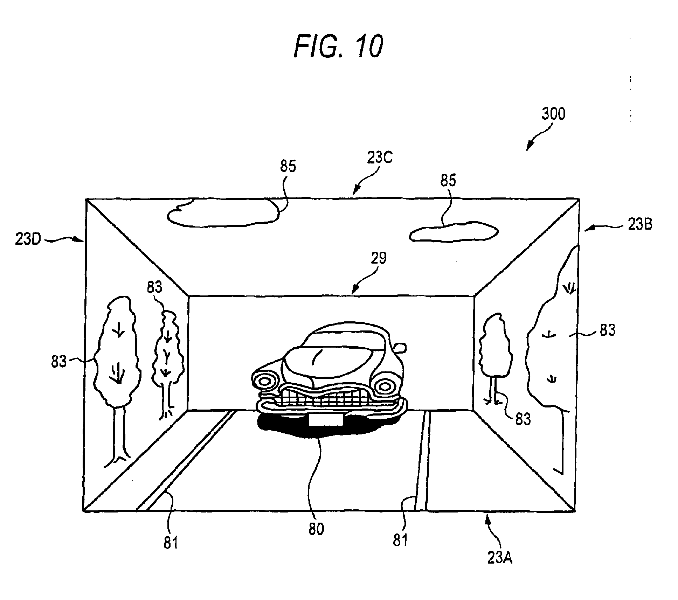

Fig. 10 is a front view of the stereoscopic two-dimensional image display apparatus as well as a displayed stereoscopic two-dimensional image and display images on the two-dimensional image direct viewing panels in accordance with a third embodiment of the invention.

In a stereoscopic two-dimensional image display apparatus 300 in accordance with this embodiment, two-dimensional image direct viewing panels 23A, 23B, 23C, and 23D are disposed in all of the upper, lower, left, and right planes relative to the stereoscopic two-dimensional image (formed image). An arbitrary one, e.g., 23A, of the four two-dimensional image direct viewing panels 23A, 23B, 23C, and 23D is provided rotatably by means of the rotating shaft 25, and the other three panels, 23B, 23C, and 23D, are fixedly provided.

In this stereoscopic two-dimensional image display apparatus 300, as the plurality of two-dimensional image direct viewing panels 23A, 23B, 23C, and 23D are provided on the upper, lower, left, and right sides of a stereoscopic two-dimensional image (formed image) 80, all the surrounding scenes encompassing the stereoscopic two-dimensional image (formed image) can be interlocked as associated images. For example, as in the illustrated example, lanes 81 are displayed on the two-dimensional image direct viewing panel 23A for the automobile 80 of the stereoscopic two-dimensional image, rows of trees 83 on the two-dimensional image direct viewing panels 23B and 23D, and clouds 85 on the two-dimensional image direct viewing panel 23C. As a result, all the surrounding planes encompassing the stereoscopic two-dimensional image (formed image) are effectively utilized, and the stereoscopic visual effect is enhanced to a maximum.

Therefore, according to this stereoscopic two-dimensional image display apparatus 300, it is possible to obtain optimum rendering power for expressing different depths, and maximally improves realism, visibility, and amusement features. In addition, it is possible to realize with a simple structure the arrangement in which the stereoscopic two-dimensional image (formed image) is encompassed by the upper, left, left, and right two-dimensional image direct viewing panels 23A, 23B, 23C, and 23D, and one panel 23A among them is disposed uprightly in front of the image transmission panel 29. Furthermore, when one two-dimensional image direct viewing panel 23A is disposed uprightly, the space for forming the stereoscopic two-dimensional image (formed image) can be hermetically sealed, so that it is also possible to obtain the dust-proofing effect for preventing the entry of dust or the like into the space for forming the stereoscopic two-dimensional image (formed image).

Although the present invention has been shown and described with reference to specific preferred embodiments, various changes and modifications will be apparent to those skilled in the art from the teachings herein. Such changes and modifications as are obvious are deemed to come within the spirit, scope and contemplation of the invention as defined in the appended claims.

## Claims

1. A stereoscopic two-dimensional image display apparatus comprising:
a display unit having an image display surface for displaying a two-dimensional image;
an image transmission panel which has a microlens array disposed in spaced-apart relation to the image display surface, and forms a stereoscopic two-dimensional image by allowing the light emergent from the image display surface by the microlens array; and
a two-dimensional image direct viewing panel having an image display surface disposed in an arbitrary space on at least one of upper, lower, left, and right sides relative to the stereoscopic two-dimensional image.

2. The stereoscopic two-dimensional image display apparatus according to claim 1, wherein the two-dimensional image direct viewing panel is disposed on an opposite side of the image transmission panel to the display unit, thereby allowing only a two-dimensional image to be visible by the two-dimensional image direct viewing panel shielding the image transmission panel.

3. The stereoscopic two-dimensional image display apparatus according to claim 2, wherein the two-dimensional image direct viewing panel is provided movably by a rotating shaft oriented in the same direction as an arbitrary side portion.

4. The stereoscopic two-dimensional image display apparatus according to claim 1, wherein an angle formed by the stereoscopic two-dimensional image and the two-dimensional image direct viewing panel is not less than 90 degrees and not more than 135 degrees.

5. A stereoscopic two-dimensional image display method comprising:
causing a two-dimensional image displayed on an image display surface of a display unit to form an image by a microlens array disposed in spaced-apart relation to the image display surface, so as to display a stereoscopic two-dimensional image in front of the image display surface; and
displaying an image on an image display surface of a two-dimensional image direct viewing panel disposed in an arbitrary space on at least one of upper, lower, left, and right sides relative to the stereoscopic two-dimensional image.
